# FASCICULE DE BREVET EUROPEEN

(11) **EP 0 480 801 B1**
(45) Date de publication et mention de la délivrance du brevet: **09.03.1994**
(21) Numéro de dépôt: 91402648.9
(22) Date de dépôt: 04.10.1991
(51) Int. Cl.: B62D 5/06, B62D 1/24

(54) **Direction assistée de véhicule automobile**
Hilfstkraftlenkung für ein Kraftfahrzeug
Power steering for a motor vehicle

(30) Priorité: 08.10.1990 FR 9012705
(43) Date de publication de la demande: 15.04.1992
(73) Titulaire: AUTOMOBILES PEUGEOT, 75116 Paris (FR); AUTOMOBILES CITROEN, 92200 Neuilly-sur-Seine (FR)
(72) Inventeur: Dore, Jacques, F-92700 Colombes (FR)
(74) Mandataire: Boivin, Claude

(56) Documents cités:
- EP-A- 0 353 125
- FR-A- 2 211 907
- FR-A- 2 240 678
- FR-A- 2 371 332
- FR-A- 2 415 566
- US-A- 2 424 288

## Description

Une direction assistée de véhicule automobile comprend une vanne d'assistance commandée par le volant de direction et un vérin d'assistance qui entraîne la crémaillère de direction et dont les chambres sont sélectivement mises en communication par la vanne d'assistance avec une source de haute pression et avec l'échappement.

On connaît des directions assistées qui comportent un dispositif de commande auxiliaire propre à assurer automatiquement l'alimentation du vérin d'assistance, par exemple lorsque la proximité d'un obstacle est détectée. Le brevet français FR-A-2 634 523 décrit une direction assistée de ce genre comportant les caractéristiques définies dans le préambule de la revendication 1.

Lorsque, à la suite d'une anomalie, le dispositif de commande auxiliaire a assuré le braquage des roues et que le conducteur veut reprendre le contrôle de son véhicule, tout se passe bien si le conducteur veut simplement augmenter le braquage des roues. Par contre, si le conducteur veut braquer les roues dans l'autre sens, la vanne d'assistance délivre de la pression dans l'autre chambre du vérin d'assistance et la pression dans le circuit auxiliaire augmente . Il en résulte un blocage hydraulique de la direction.

La présente invention a pour objet une direction assistée à dispositif de commande auxiliaire, qui est perfectionnée de manière à remédier à cet inconvénient.

Cette direction assistée est caractérisée en ce que sur chacun des circuits de commande auxiliaire est disposé un clapet de surpression propre à mettre le circuit en communication avec le réservoir dès que la pression augmente au-delà d'une valeur donnée.

On a décrit ci-après, à titre d'exemple non limitatif, un mode de réalisation de la direction assistée selon l'invention avec référence au dessin annexé dans lequel :

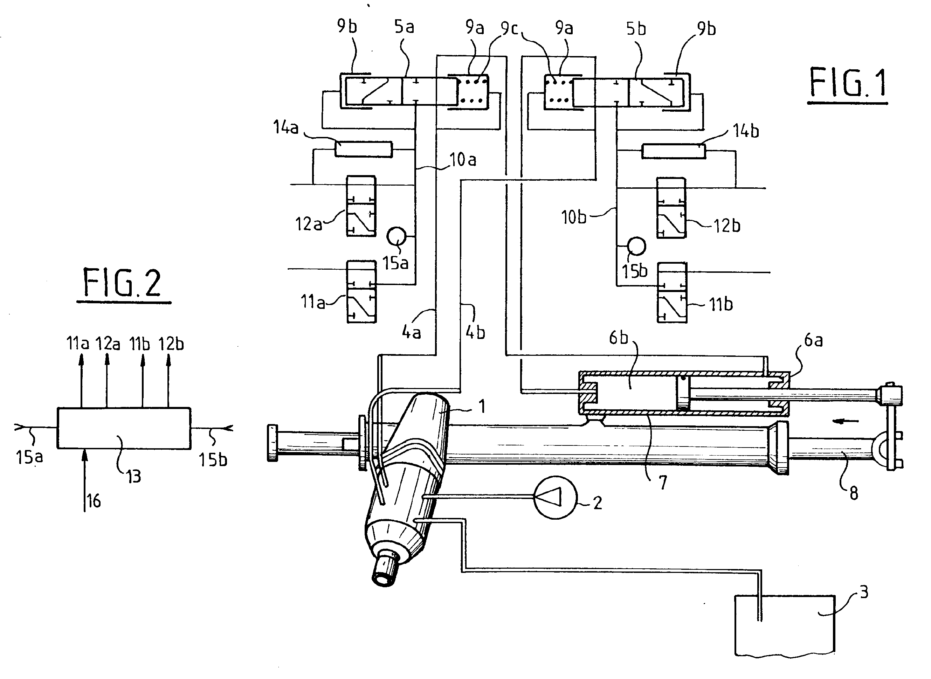

La Figure 1 est un schéma de cette direction assistée;
La Figure 2 est un schéma de la commande électrique.

Telle qu'elle est représentée au dessin, la direction assistée comprend une vanne de direction 1 commandée par le volant de direction et qui est reliée à une source de haute pression 2 et à un réservoir 3. Des conduits 4a et 4b relient cette vanne, par l'intermédiaire de vannes 5a et 5b aux deux chambres 6a et 6b d'un vérin 7 entraînant la crémaillère de direction 8.

Chacune des vannes 5a et 5b comprend un tiroir délimitant deux chambres opposées 9a et 9b. Les chambres 9a sont reliées aux conduits 4a et 4b; les deux chambres 9b sont reliées à un circuit de commande auxiliaire 10a ou 10b qui peut être mis en communication avec la source de haute pression par une électro-vanne 11a ou 11b et avec le réservoir par une électro-vanne 12a ou 12b.Les vannes 5a et 5b sont en position normale d'ouverture des circuits 4a ou 4b grâce à des ressorts 9c disposés dans les chambres 9a.

Lorsque la pression dans la chambre 9a des vannes 5a et 5b est prédominante, le tiroir de la vanne occupe une position dans laquelle il établit la communication entre la vanne de direction 1 et la chambre correspondante 6a ou 6b du vérin. Lorsque la pression dans la chambre 9b est prédominante, cette communication est coupée et la chambre 6a ou 6b du vérin est mise en communication avec le circuit 10a ou 10b, donc avec la haute pression si la vanne 11a ou 11b est ouverte ou avec le réservoir si la vanne 12a ou 12b est ouverte.

En temps normal, les vannes 12a et 12b sont ouvertes et les vannes 11a et 11b fermées; les vannes 5a et 5b mettent donc la vanne 1 en communication avec les chambres 6a et 6b du vérin 7. Ces vannes 11a,11b,12a et 12b sont commandées par un calculateur électronique 13 recevant des informations de détecteurs d'anomalies et/ou la proximité d'obstacles 16.
Chacun des circuits 10a et 10b est relié au réservoir par un clapet de surpression 14a ou 14b; il est, en outre, muni d'un capteur de pression ou d'un mano-contact 15a ou 15b permettant de commander par l'intermédiaire du calculateur 13 respectivement la vanne 12a ou 12b en position d'ouverture.

En cas d'anomalie, la vanne 11a ou 11b se ferme alors que la vanne 12a ou 12b s'ouvre ; les tiroirs des vannes 5a et 5b se déplacent de sorte que l'une des chambres 6a et 6b du vérin 7 est mise à la haute pression et l'autre à l'échappement. La crémaillère 8 se déplace et les roues se braquent.

Si le conducteur désire reprendre le contrôle de sa direction et agit sur le volant dans le sens correspondant à une augmentation de l'angle de braquage, la pression délivrée par la vanne 1 dans le conduit 4a, par exemple, est supérieure à la pression dans le circuit 10a et le tiroir de la vanne 5a se déplace de manière à obturer le circuit 10a et à mettre la vanne de direction 1 en communication avec la chambre 6a du vérin.

Par contre, si le conducteur veut braquer la direction dans le sens contraire à celui dans lequel agit la commande auxiliaire, la vanne de direction 1 délivre du fluide sous pression dans le conduit 4b de manière à alimenter la chambre 6b du vérin 7. La pression dans la chambre 6a et par suite dans le conduit 4a augmente de sorte que le clapet de surpression 14a s'ouvre,reliant le conduit 10a au réservoir, ce qui évite un blocage de la direction.

Les clapets 14a et 14b sont tarés de façon à rester fermés aux pressions normales de fonctionnement et à s'ouvrir pour un effort raisonnable exercé par le conducteur sur le volant. Le capteur de pression ou mano-contact 15a ou 15b, convenablement taré, détecte la surpression et envoie au calculateur 13 un signal qui lui permet d'une part, de donner l'ordre à l'électrovanne 12a ou 12b de relier le circuit de commande auxiliaire 10a, et d'autre part d'amener l'électrovanne 11a ou 11b en position de fermeture du circuit auxiliaire et donc de déverrouiller l'installation et de désactiver la commande auxiliaire.

Dans un tel cas, le conducteur qui aura voulu braquer le volant à l'encontre de la commande auxiliaire, aura ressenti un léger point dur pour immédiatement après retrouver une commande de direction normale.

Le conducteur peut, à tout moment, reprendre directement le contrôle de la direction du véhicule.

## Revendications

1. Direction assistée de véhicule automobile comprenant un vérin d'assistance (7) comportant deux chambres (6a, 6b), une vanne d'assistance (1) reliée auxdites chambres par deux conduites respectives (4a, 4b) pour mettre sélectivement en communication lesdites chambres (6a, 6b) avec une source de haute pression et avec un réservoir, deux circuits de commande auxiliaire (10a, 10b) reliés chacun à une source de haute pression par l'intermédiaire d'une électro-vanne (11a, 11b) commandée par des moyens électroniques de détection (13), et deux vannes à deux positions (5a, 5b) interposées chacune dans l'une desdites conduites (4a, 4b) et reliées chacune à l'un des circuits de commande auxiliaire (10a, 10b), chacune desdites vannes à deux positions (5a, 5b) se trouvant, en temps normal, dans une première position dans laquelle elle relie la chambre correspondante (6a, 6b) du vérin d'assistance (7) à la vanne d'assistance (1) et isole ladite chambre du circuit de commande auxiliaire (10a, 10b) correspondant, la pression délivrée dans ledit circuit de commande auxiliaire (10a, 10b) par l'électrovanne (11a, 11b) correspondante pouvant commander ladite vanne à deux positions (5a, 5b) pour l'amener dans une seconde position dans laquelle elle isole ladite chambre (6a, 6b) du vérin d'assistance de la vanne d'assistance (1) et relie ladite chambre audit circuit de commande auxiliaire (10a, 10b),
caractérisée en ce que, sur chacun des circuits de commande auxiliaire (10a, 10b) est disposé un clapet de surpression (14a ou 14b) propre à mettre le circuit en communication avec le réservoir dès que la pression augmente au-delà d'une valeur donnée.

2. Direction assistée selon la revendication 1, caractérisée en ce qu'à chaque circuit de commande auxiliaire (10a, 10b) sont associés une première électrovanne (11a ou 11b) interposée entre ce circuit et la source de haute pression et une seconde électrovanne (12a ou 12b) interposée entre le circuit et le réservoir et en ce qu'elle comporte des moyens (15a ou 15b) propres à capter la pression dans le circuit de commande auxiliaire (10a, 10b) et à envoyer un signal au calculateur (13) lorsque la pression dans le conduit est anormalement élevée de manière d'une part à commander l'électrovanne (12a ou 12b) correspondante et à mettre le circuit en communication avec le réservoir, et d'autre part à commander l'électrovanne (11a ou 11b) correspondante en position de fermeture du circuit auxiliaire.

3. Direction assistée selon la revendication 2, caractérisée en ce que les moyens (15a, 15b) sont constitués par des mano-contacts.

## Patentansprüche

1. Servolenkung für ein Kraftfahrzeug mit einem Unterstützungszylinder (7) der zwei Kammern (6a, 6b) besitzt, einem mit den besagten Kammern jeweils über zwei Leitungen (4a, 4b) verbundenen Unterstützungsventil (1), um die besagten Kammern (6a, 6b) selektiv mit einer Hochdruckquelle und mit einem Sammelbehälter in Verbindung zu bringen, zwei Hilfssteuerkreisen (10a, 10b), von denen jeder unter Zwischenschaltung eines von elektrischen Erfassungsmitteln (13) gesteuerten Magnetventils (11a, 11b) mit einer Hochdruckquelle verbunden ist, und zwei Ventilen (5a, 5b) mit zwei Stellungen, die jeweils in eine der besagten Leitungen (4a, 4b) eingeschaltet und jeweils mit einem der Hilfssteuerkreise (10a, 10b) verbunden sind, wobei jedes der besagten Ventile (5a, 5b) mit zwei Stellungen in der normalen Zeit sich in einer ersten Stellung befindet, in welcher es die entsprechende Kammer (6a, 6b) des Unterstützungszylinders (7) mit dem Unterstützungsventil (1) verbindet und die besagte Kammer vom entsprechenden Hilfssteuerkreis (10a, 10b) trennt, und der in den besagten Hilfssteuerkreis (10a, 10b) über das entsprechende Magnetventil (11a, 11b) gelieferte Druck das besagte Ventil (5a, 5b) mit zwei Stellungen ansteuern kann, um es in eine zweite Stellung zu führen, in welcher es die besagte Kammer (6a, 6b) des Unterstützungszylinders vom Unterstützungsventil (1) trennt und die besagte Kammer mit dem besagten Hilfssteuerkreis (10a, 10b) verbindet, dadurch gekennzeichnet, daß an jedem der Hilfssteuerkreise (10a, 10b) ein Überdruckventil (14a oder 14b) angeordnet ist, das dazu geeignet ist, den Kreis mit dem Sammelbehälter in Verbindung zu setzen, sobald der Druck über einen vorgegebenen Wert ansteigt.

2. Servolenkung nach Anspruch 1, dadurch gekennzeichnet, daß jedem Hilfssteuerkreis (10a, 10b) ein erstes Magnetventil (11a oder 11b) das zwischen diesen Kreis und die Hochdruckquelle eingeschaltet ist, und ein zweites Magnetventil (12a oder 12b), das zwischen den Kreis und den Sammelbehälter eingeschaltet ist, zugeordnet ist, und daß sie Mittel (15a oder 15b) aufweist, die dazu geeignet sind den Druck im Hilfssteuerkreis (10a, 10b) zu erfassen und ein Signal zum Rechner (13) zu schicken, wenn der Druck in der Leitung anormal hoch ist, derart, daß einerseits das entsprechende Magnetventil (12a oder 12b) angesteuert und der Kreis mit dem Sammelbehälter verbunden wird und andererseits das entsprechende Magnetventil (11a oder 11b) in die Stellung zum Abschließen des Hilfskreises gesteuert wird.

3. Servolenkung nach Anspruch 2, dadurch gekennzeichnet, daß die Mittel (15a, 15b) durch Druckschalter gebildet werden.

## Claims

1. Power steering for a motor vehicle and including an assistance jack (7) comprising two chambers (6a, 6b), an assistance valve (1) connected to said chambers by two respective pipes (4a, 4b) so as to selectively place in communication said chambers (6a, 6b) with a high pressure source and with a tank, two auxiliary control circuits (10a, 10b) each connected to a high pressure source by means of an electrovalve (11a, 11b) controlled by electronic detection means (13), and two valves with two positions (5a, 5b) each inserted in one of said pipes (4a, 4b) and each connected to one of the auxiliary control circuits (10a, 10b), each of said two-position valves (5a, 5b) being located during normal functioning in a first position in which it connects the corresponding chamber (6a, 6b) of the assistance jack (7) to the assistance valve (1) and isolates said chamber from the corresponding auxiliary control circuit (10a, 10b), the pressure delivered into said auxiliary control circuit (10a, 10b) by the corresponding electrovalve (11a, 11b) being able to control said two-position valve (5a, 5b) so as to bring it into a second position where it isolates said chamber (6a, 6b) of the assistance jack from the assistance valve (1) and connects said chamber to said auxiliary control circuit (10a, 10b),
wherein an excess pressure valve (14a or 14b) is disposed on each of the auxiliary control circuits (10a, 10b), said excess pressure valve being able to place the ciruit in communication with the tank as soon as the pressure increases beyond a given value.

2. Power steering according to claim 1,
wherein associated with each auxiliary control circuit (10a, 10b) are a first electrovalve (11a or 11b) inserted between this circuit and the high pressure source and a second electrovalve (12a or 12b) inserted between the circuit and the tank, and wherein it comprises means (15a or 15b) able to capture the pressure in the auxiliary control circuit (10a, 10b) and send a signal to the calculator (13) when the pressure in the pipe is abnormally high so as to firstly control the corresponding electrovalve (12a or 12b) and place the circuit in communication with the tank, and secondly control the corresponding electrovalve (11a or 11b) in the closing position of the auxiliary circuit.

3. Power steering according to claim 2,
wherein the means (15a, 15b) are constituted by pressure controllers.
